# EUROPEAN PATENT SPECIFICATION

(11) **EP 0 417 918 B1**
(45) Date of publication and mention of the grant of the patent: **30.10.1996**
(21) Application number: 90308998.5
(22) Date of filing: 16.08.1990
(51) Int. Cl.: H04J 3/06, H04L 7/02

(54) **Data receiver interface circuit**
Datenempfängerschnittstellenschaltung
Circuit d'interface d'un récepteur de données

(30) Priority: 13.09.1989 CA 611329
(43) Date of publication of application: 20.03.1991
(73) Proprietor: NORTHERN TELECOM LIMITED, Montreal, Quebec H2Y 3Y4 (CA)
(72) Inventor: Chenier, Marcel, Hull, Quebec, J8Y 1X7 (CA); Wale, Brian, Orleans, Ontario K4A 2N8 (CA)
(74) Representative: Ryan, John Peter William

(56) References cited:
- US-A- 3 891 971
- US-A- 4 323 790
- PATENT ABSTRACTS OF JAPAN vol. 10, no. 80 (P-441)29 March 1986 & JP-A-60 217 446

## Description

### Field of the Invention

This invention relates generally to a data receiver interface circuit and more particularly to a method and apparatus for accepting data which is correctly framed within predetermined criteria.

### Background of the Invention

Many data transmission systems send and receive framed serial data. Each frame of data is identified with a frame pulse that separates it from the preceding frame of data. This frame boundary may be used for alignment of the data being transmitted. For example, when a stream of bits is being transmitted in a multi-channel arrangement, where each channel has ten bits, the first bit represents bit 1 of channel 1, the second bit represents bit 2 of channel 1... the 10th bit represents bit 10 of channel 1 and the 11th bit represents bit 1 of channel 2. The first bit of each channel is a frame pulse and bits 2 to 10 are typically comprised of data bits, however some schemes may provide for bit 2 of each respective channel to be used for verification such as parity. A receiver receiving the serial stream of bits uses the frame pulses for aligning the data bits with their respective channels. Thus frame pulses are used to demark the boundary of clusters of data and provide the receiver with a frame of reference.

The transmission of framed data is shown in a prior art elastic storage circuit for use in a telephone switching system described in United States patent bearing the number 4,323,790 in the name of Stephen C. Dunning et al. This circuit employs a means of detecting first-in first-out (FIFO) memory overflow or underflow due to a chronic increase or decrease in the frequency rate of the data. The FIFO temporarily stores the data portion of a serial stream having been framed by frame pulses. This circuit does not provide a means of monitoring data corruption.

US-A-3891971 (Hirvela et al) describes a device for receiving data on a plurality of parallel lines wherein the data on specific lines occurs at different rates. Each line is sampled at a rate at least as fast as the data on any line can be presented, but only places the sampled data in scratch pad memory once for each clock occurrence.

Data is said to be correctly framed when the number of clock cycles between pairs of successive frame pulses is equal to a predetermined number. However, it is not uncommon for corrupt data to be received at a node of a transmission system; the cause of the data corruption may be unstable clock sources, noise in the system, poor connections, or a myriad of other causes. Often, it is found that extra clock cycles or too few clock cycles occur between two successive frame pulses in a system where the train of frame pulses should be periodic and thus have a predetermined number of clock cycles between each pair thereof. If this situation goes undetected a large amount of corrupt data may be accepted by the receiver before an error control mechanism is able to detect the problem and initiate corrective action. Most of the known data receivers use an input stage that includes an elastic buffer usually in the form of a FIFO. Presently available commercial FIFOs commonly provide fifo-full and fifo-empty indications to denote overflow and underflow conditions as well as read and write pointers. However it is not possible to use the read and write pointers to monitor the contents of the FIFO since they are internal to the devices.

It is thus an object of the invention to provide a novel circuit and method for accepting correctly framed data by detecting if the number of clock cycles between two successive frame pulses is equal to a predetermined number, and accepting the data if the number of clock cycles is equal to the predetermined number.

### Summary of the Invention

In accordance with the invention, there is provided a method of accepting data framed between a pair of successive frame pulses, the pair of frame pulses being separated by a plurality of data bits each of which corresponds to a clock cycle, the method comprising the steps of storing the data in a storage device and determining whether to accept the stored data, characterized by:
counting the clock cycles that occur between the pair of successive frame pulses; and
accepting the stored data if the counted number of clock cycles equals a predetermined number.

From another aspect, the invention provides a circuit for accepting data framed between a pair of successive frame pulses, the pair of frame pulses being separated by a plurality of data bits each of which corresponds to a clock cycle, the circuit comprising a storage device for temporarily storing the data, a counting means and a control circuit characterized by:
the counting means being responsive to control signals for counting the clock cycles between the successive frame pulses; and
the control circuit generating signals for controlling the storing and counting of the data bits, and allowing the data stored in the storage device to be read if the counted number of clock cycles corresponds to a predetermined number.

### Detailed Description of the Preferred Embodiment

An embodiment of the invention will now be described in conjunction with the drawings in which:
Figure 1 is a block diagram of the data accepting circuit of the present invention; and
Figures 2A and 2B are state diagrams of a read-write finite state machine (R/W-FSM) and a reset finite state machine (R-FSM) respectively, illustrating the operation of the circuit of figure 1.

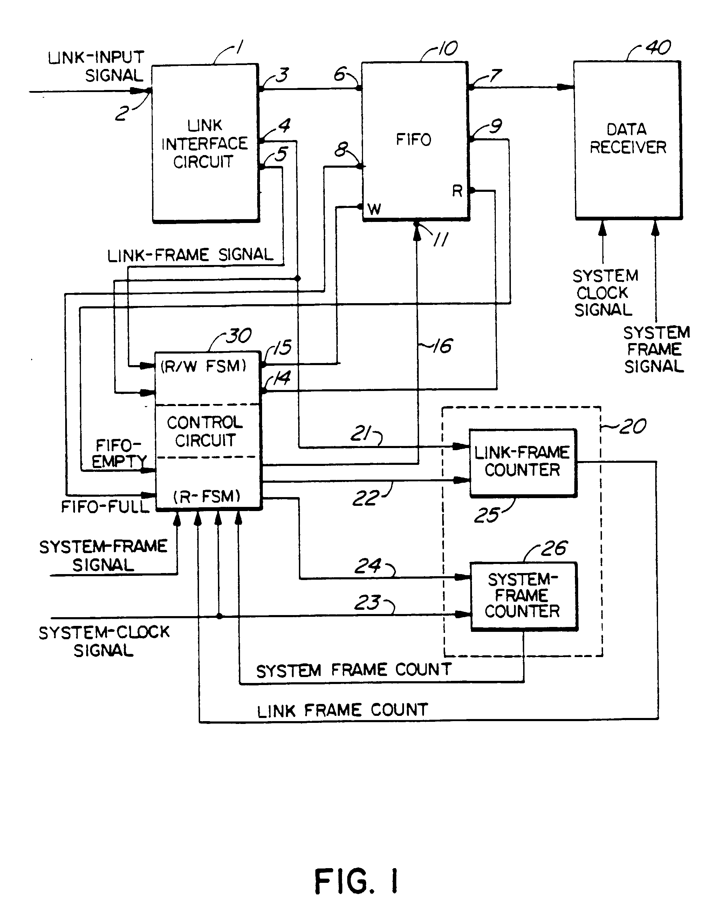

Referring now to figure 1, a link-interface circuit 1 is shown having a data input terminal 2 for receiving an input signal from a data link. The input signal is a biphase encoded signal having data periodically framed within successive frame pulses. As is generally known, a biphase encoded signal encodes data, framing information, and clocking information which may be recovered therefrom. The encoding is as follows: a logic 1 is encoded as 0, 1, a logic 0 is encoded as 1, 0 and a biphase violation representing a frame pulse is encoded as three consecutive ones or zeros. Since the link input signal is typically a serial stream of bits having data bits and frame bits serially combined, it is necessary to separate the data bits and the frame bits. As is well known in the art and exemplified in United States patent 4,323,790, the interface circuit 1 shown in figure 1 provides a means for receiving the link data input signal and for separately recovering data, clock and framing information. The link interface circuit 1 has a first output terminal 3 for providing a link-data signal, a second output terminal 4 for providing a link-clock signal and a third output terminal 5 for providing a link-frame signal. These three signals are derived from the composite link input signal.

A data receiver 40 reads data quasi-synchronously. A quasi-synchronous arrangement is one wherein a receiver and transmitter have clock signals of the same frequency however communication between the transmitter and receiver is asynchronous. Typically, an elastic buffer such as a first-in first-out buffer is used to temporarily store data in an asynchronous communications scheme.

A first-in first-out buffer (FIFO) 10 has an input terminal 6 connected to the data output terminal 3 of the interface circuit 1 and serves to temporarily store a portion of the link data signal which may then be outputted on terminal 7 to a data receiver 40. As is conventional for such devices, the FIFO 10 has a fifo-full terminal 8 and a fifo-empty terminal 9, a reset terminal 11, a read terminal R and a write terminal W. A control circuit 30 is adapted to control the operation of the FIFO 10 in response to signals from the interface circuit 1, a counting circuit means 20 and the FIFO 10. The control circuit 30 is connected to the output terminals 4 and 5 of the interface circuit 1 for receiving the derived link-clock signal and the derived link frame signal respectively. In order for the data receiver 40 to function with the circuit of the invention, it provides the control circuit 30 with a system-clock signal having the same frequency as the link-clock signal and a system-frame signal having the same frequency as the link-frame signal.

The control circuit 30 is basically a network of logic gates interconnected to output predetermined control signals when predetermined input signals are asserted. The circuit 30 may therefore be considered to be a finite state machine (FSM). In fact the control circuit 30 may be logically divided into a read/write state machine (R/W-FSM) and a reset state machine (R-FSM) as shown in figure 1.

The counting circuit means 20 has first and second counters 25 and 26 for counting clock cycles within any given frame of data. The first counter 25 is responsive to the link-clock signal on line 21 and a delayed-link-frame signal on a first clear line 22 to generate a link frame count representing the number of clock cycles between frame pulses in the link input signal. Similarly, the second counter 26 is responsive to a system clock signal on input line 23 and a delayed-system-frame signal on input line 24 to generate a system frame count representing the number of system clock signals that exist between system frame pulses in the system frame signal. Both the delayed-link-frame and the delayed-system-frame signals are derived from the link-frame and system-frame signals respectively in control circuit 30, and they follow their respective original signal in time, being shifted in time from them by one clock cycle. The counters 25 and 26 provide their respective output signals to the control circuit 30.

The counter 26 and related circuitry serve to monitor the operational relationship between the data receiver 40 and the FIFO 10 by insuring that the receiver is capable of reading the contents of the FIFO properly.

In operation, the link interface circuit 1 receives the link input signal which, as discussed above, is a composite serial signal composed of data and frame bits as well as clocking information. The interface circuit 1 decodes the received signal into the link-data signal, the link-clock signal and the link-frame signal. The control circuit 30 receives the link-clock signal, the link-frame signal, the system clock signal, the system-frame signal, the fifo-full signal, the fifo-empty signal, the link and system frame counts, and generates the write, read or reset signals to the FIFO 10 in dependence upon the state of the received signals. When the write signal is asserted, the FIFO 10 receives the link-data signal and stores data bits sequentially until the read signal or the reset signal is asserted. Upon assertion of the read signal the data bits are read out of the FIFO 10 by the data receiver 40. The FIFO 10 is used as a temporary buffer to store the data while the control circuit 30 determines if the data is correctly framed. When the reset signal is asserted, the FIFO 10 flushes all its data. This process of flushing may simply be achieved by resetting the read and write pointers within the FIFO 10 instead of actually erasing the stored data.

The first and second counters 25 and 26 operate in the same manner but have different input and output signals. The count of the first counter 25 is incremented by the link clock signal and is reset upon assertion of the delayed-link frame signal which is generated by the control circuit 30. The control circuit 30, in response to the link-frame signal compares the count represented by the link frame count to a predetermined number. If the count and the predetermined number are equal, the read signal is generated by the control circuit 30 in dependence upon the system-clock signal and the system-frame signal being asserted, and data stored in the FIFO 10 may be read. The count of the second counter 26 is incremented by the system-clock signal and the second counter is reset upon assertion of the delayed-system-frame signal. Before generating the read signal the integrity of the system-frame signal is verified by determining if the system-frame signal has the correct number of clock cycles between successive frame pulses. If the number of clock cycles between frame pulses is incorrect, the control circuit 30 generates the reset signal to clear the contents of the FIFO 10.

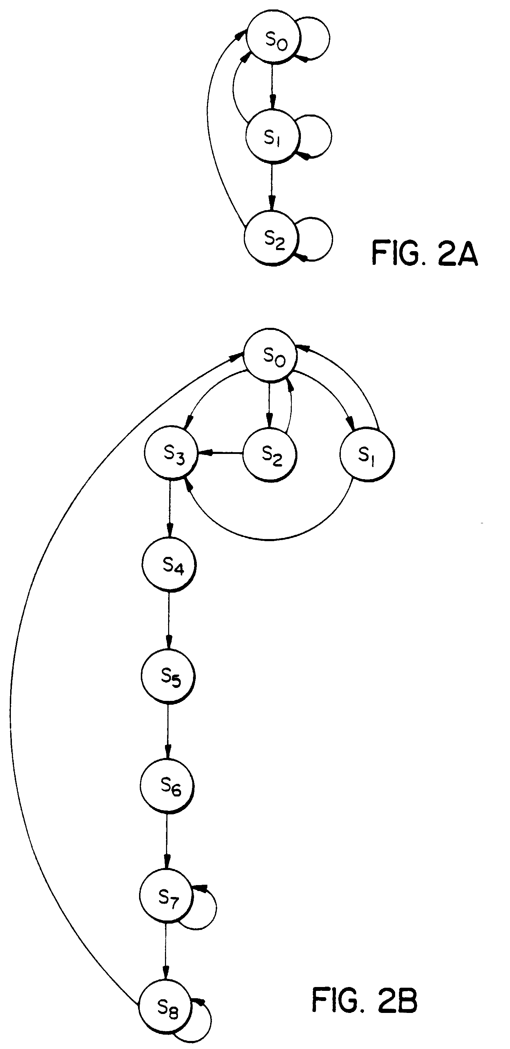

The following description of operation may be better understood by reference to figure 2A which illustrates the functions of the R/W-FSM and figure 2B which illustrates the functions of the R-FSM.

The following pseudo code represents the operation of the R/W-FSM:

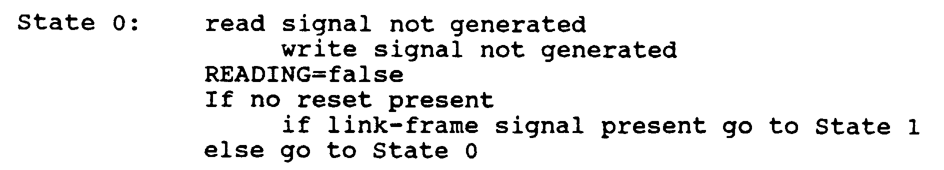

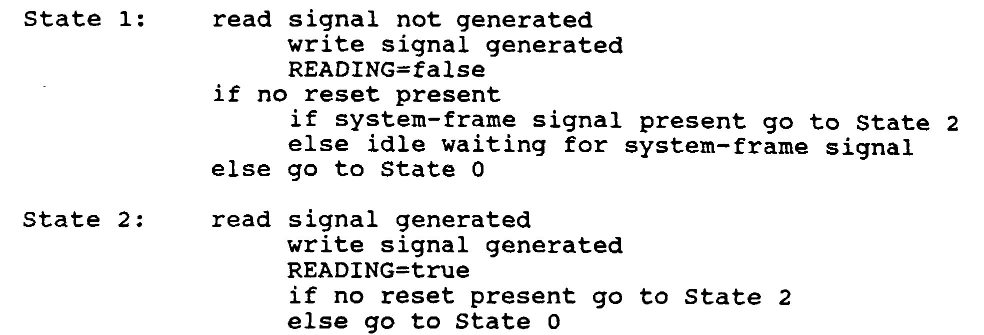

The read/write FSM will wait in State 0 after the reset signal has been asserted until the link-frame signal is present. When the first link-frame pulse occurs the R/W-FSM will assert the write signal and data will be written into the FIFO. If the system-frame signal is generated, State 2 is executed from State 1 and the FIFO is read.

The following pseudo code represents the operation of the reset FSM.

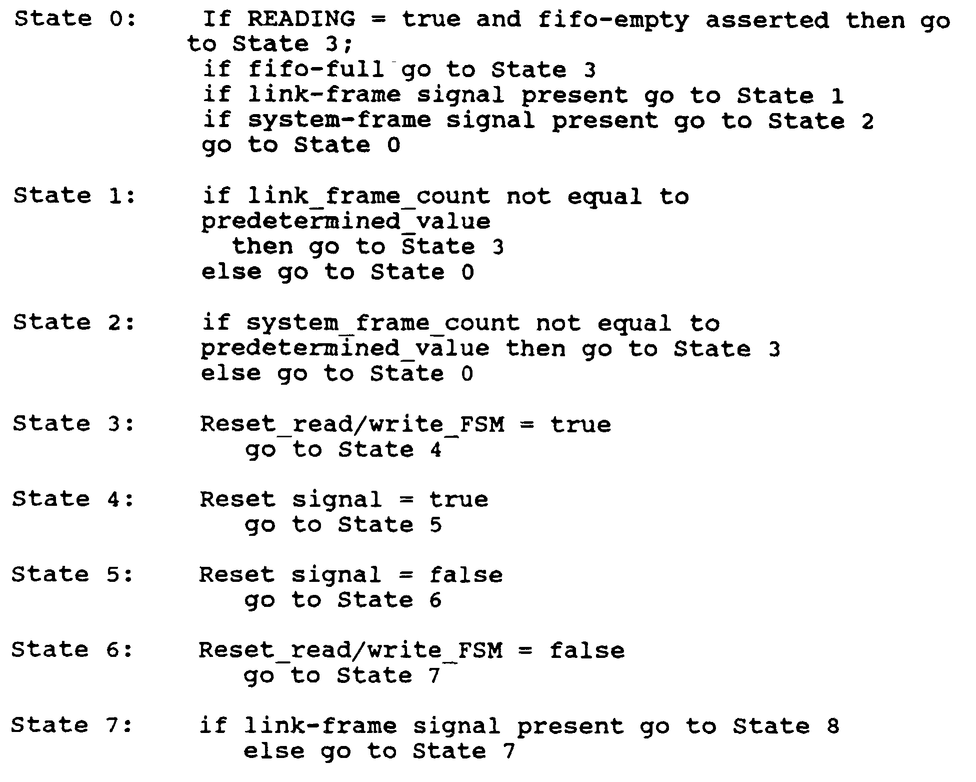

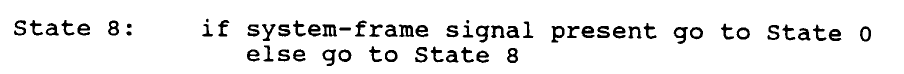

State 0 is the idle state wherein the R-FSM is monitoring for either full or empty conditions. State 1 and 2 go to state 3 if the link frame count is not equal to the predetermined value. State 3 and 6 are error states. The reset_read/write FSM signal first resets the R/W-FSM and the assertion of the reset signal resets the FIFO. States 7 and 8 wait until the start of the next frame before going back to the idle state 0.

Conveniently the control circuit 30 may be realized using one or more programmable logic arrays suitably configured to function as the R/W-FSM and R-FSM. Similarly the counters 25 and 26 may be realized using the same or another programmable logic array.

The circuit of the invention therefore allows a data link interface circuit that uses a commercially available monolithic FIFO to accept correctly framed data.

With the addition of a minimal amount of circuitry to a conventional data receiver interface circuit, the invention provides an economic and effective way of rejecting corrupt data due to incorrect framing.

## Claims

1. A method of accepting data framed between a pair of successive frame pulses, the pair of frame pulses being separated by a plurality of data bits each of which corresponds to a clock cycle, the method comprising the steps of storing the data in a storage device (10) and determining whether to accept the stored data, characterized by:
counting the clock cycles that occur between the pair of successive frame pulses; and
accepting the stored data if the counted number (25) of clock cycles equals a predetermined number.

2. A method as claimed in claim 1, characterized by the step of accepting comprising the step of allowing the stored data to be read out of the storage device (10).

3. A method as claimed in claim 1 or 2, characterized by the step of storing comprising the steps of writing the data bits having a predetermined order into the storage device (10), and preserving the order of the bits.

4. A method as claimed in claim 1, 2 or 3, characterized by the further step of overwriting the data in the storage device (10) with a next plurality of bits if the counted number (25) of clock cycles does not equal the predetermined number.

5. A circuit for accepting data framed between a pair of successive frame pulses, the pair of frame pulses being separated by a plurality of data bits each of which corresponds to a clock cycle, the circuit comprising a storage device (10) for temporarily storing the data, a counting means (20) and a control circuit (30), characterized by:
the counting means (20) being responsive to control signals (21, 22) for counting (25) the clock cycles between the successive frame pulses; and
the control circuit (30) generating signals for controlling the storing and counting of the data bits, and allowing the data stored in the storage device to be read if the counted number (25) of clock cycles corresponds to a predetermined number.

6. A circuit as claimed in claim 5, characterized by the counting means (20) comprising a binary counter.

7. A circuit as claimed in claim 6, characterized by the storage device (10) being a first-in first-out buffer.

8. A circuit as claimed in claim 7, characterized by the control circuit (30) being a programmable array logic device configured to provide the functions of the control circuit.

9. A circuit as claimed in claim 8, characterized by the first-in first-out buffer being a commercial monolithic device.

10. A circuit as claimed in claim 5, characterized by the counter means (20) also being responsive to clock and frame signals, from a data receiver (40) coupled to the circuit, to provide a count signal (26) corresponding to the number of bits between each pair of received frame pulses from the receiver, and by the control circuit (30) further comprising means for verifying that the timing of the receiver corresponds to that of the framed data.

## Patentansprüche

1. Verfahren zur Annahme von Daten, die zwischen einem Paar aufeinanderfolgender Rahmenimpulse eingerahmt sind, wobei das Paar von Rahmenimpulsen durch eine Vielzahl von Datenbits getrennt wird, von denen jedes mit einem Taktzyklus korrespondiert, wobei das Verfahren die Schritte umfaßt, die Daten in einer Speichervorrichtung (10) zu speichern und zu entscheiden, ob die gespeicherten Daten angenommen werden,
dadurch gekennzeichnet, daß die Taktzyklen gezählt werden, die zwischen dem Paar der aufeinanderfolgenden Rahmenimpulse vorkommen, und daß die gespeicherten Daten angenommen werden, wenn die gezählte Anzahl (25) von Taktzyklen gleich einer vorherbestimmten Anzahl ist.

2. Verfahren nach Anspruch 1,
dadurch gekennzeichnet, daß der Schritt der Annahme den Schritt umfaßt, zu gestatten, daß die gespeicherten Daten aus der Speichervorrichtung (10) ausgelesen werden.

3. Verfahren nach Anspruch 1 oder 2,
dadurch gekennzeichnet, daß der Schritt des Speicherns den Schritt umfaßt, die Daten, die eine vorbestimmte Reihenfolge haben, in die Speichervorrichtung (10) zu schreiben, und daß die Reihenfolge der Bits erhalten bleibt.

4. Verfahren nach Anspruch 1, 2 oder 3,
dadurch gekennzeichnet, daß es den weiteren Schritt umfaßt, die Daten in der Speichervorrichtung (10) mit einer nächsten Vielzahl von Bits zu überschreiben, wenn die gezählte Anzahl (25) von Taktzyklen nicht gleich der vorherbestimmten Anzahl ist.

5. Schaltung zur Annahme von Daten, die zwischen einem Paar aufeinanderfolgender Rahmenimpulse eingerahmt sind, wobei das Paar von Rahmenimpulsen durch eine Vielzahl von Datenbits getrennt wird, von denen jedes mit einem Taktzyklus korrespondiert, wobei die Schaltung eine Speichervorrichtung (10) zum Zwischenspeichern der Daten, eine Zählervorrichtung (20) und eine Steuerschaltung (30) aufweist,
dadurch gekennzeichnet, daß die Zählervorrichtung (20) auf die Kontrollsignale (21, 22) anspricht, um die Taktzyklen zwischen den aufeinanderfolgenden Rahmenimpulsen zu zählen (25), und daß die Steuerschaltung (30) Signale erzeugt, die das Speichern und Zählen der Datenbits steuern und es gestattet, daß die in der Speichervorrichtung gespeicherten Daten gelesen werden, wenn die gezählte Anzahl (25) von Taktzyklen einer vorherbestimmten Anzahl entspricht.

6. Schaltung nach Anspruch 5,
dadurch gekennzeichnet, daß die Zählervorrichtung (20) einen Dualzähler aufweist.

7. Schaltung nach Anspruch 6,
dadurch gekennzeichnet, daß die Speichervorrichtung (10) durch einen FIFO-Puffer gebildet ist.

8. Schaltung nach Anspruch 7,
dadurch gekennzeichnet, daß die Steuerschaltung (30) ein programmierbarer Array-Logik-Baustein ist, der derart konfiguriert ist, daß er die Funktionen der Steuerschaltung aufweist.

9. Schaltung nach Anspruch 8,
dadurch gekennzeichnet, daß der FIFO-Puffer durch einen im Handel erhältlichen monolitischen Baustein gebildet ist.

10. Schaltung nach Anspruch 5,
dadurch gekennzeichnet, daß die Zählervorrichtung (20) auch auf Takt- und Rahmensignale eines an die Schaltung angeschlossenen Datenempfängers (40) anspricht, um ein Zählersignal (26) zu erzeugen, das der Anzahl von Bits zwischen jedem Paar von vom Empfänger empfangenen Rahmenimpulsen entspricht, und daß die Steuerschaltung (30) weiterhin Vorrichtungen aufweist, um nachzuprüfen, daß die zeitliche Abstimmung des Empfängers der der eingerahmten Daten entspricht.

## Revendications

1. Procédé d'acceptation de données mises en trames entre deux impulsions successives de trame, la paire d'impulsions de trame étant séparée par plusieurs bits de données correspondant chacun à un cycle d'horloge, le procédé comprenant des étapes de mémorisation des données dans un dispositif (10) de mémorisation et de détermination du fait que les données mémorisées peuvent être acceptées ou non, caractérisé par :
le comptage des cycles d'horloge apparaissant entre les deux impulsions successives de trame, et
l'acceptation des données mémorisées lorsque le nombre compté (25) de cycles d'horloge est égal à un nombre prédéterminé.

2. Procédé selon la revendication 1, caractérisé en ce que l'étape d'acceptation comprend une étape permettant la lecture des données mémorisées dans le dispositif de mémorisation (10).

3. Procédé selon la revendication 1 ou 2, caractérisé en ce que l'étape de mémorisation comprend l'écriture des bits de données ayant un ordre prédéterminé dans le dispositif de mémorisation (10), et la conservation de l'ordre des bits.

4. Procédé selon la revendication 1, 2 ou 3, caractérisé par l'étape supplémentaire de réécriture des données dans le dispositif de mémorisation (10) avec un nouvel ensemble de bits lorsque le nombre compté (25) de cycles d'horloge n'est pas égal au nombre prédéterminé.

5. Circuit d'acceptation de données mises en trames entre deux impulsions successives de trame, les impulsions de la paire d'impulsions de trame étant séparées par plusieurs bits de données correspondant chacun à un cycle d'horloge, le circuit comprenant un dispositif de mémorisation (10) destiné à mémoriser temporairement les données, un dispositif de comptage (20) et un circuit de commande (30), caractérisé en ce que :
le circuit de comptage (20) est commandé par des signaux de commande (21, 22) de comptage (25) des cycles d'horloge entre les impulsions successives de trame, et
le circuit de commande (30) crée des signaux de commande de la mémorisation et du comptage des bits de données, et permet la lecture des données mémorisées dans le dispositif de mémorisation lorsque le nombre compté (25) de cycles d'horloge correspond à un nombre prédéterminé.

6. Circuit selon la revendication 5, caractérisé en ce que le dispositif de comptage (20) est un compteur binaire.

7. Circuit selon la revendication 6, caractérisé en ce que le dispositif de mémorisation (10) est un circuit tampon à file.

8. Circuit selon la revendication 7, caractérisé en ce que le circuit de commande (30) est un dispositif logique programmable ayant une configuration lui permettant de remplir les fonctions du circuit de commande.

9. Circuit selon la revendication 8, caractérisé en ce que le circuit tampon à file est un dispositif monolithique du commerce.

10. Circuit selon la revendication 5, caractérisé en ce que le dispositif compteur (20) est aussi commandé par des signaux d'horloge et de trame provenant d'un récepteur de données (40) couplé au circuit afin qu'il transmette un signal (26) de comptage correspondant au nombre de bits compris entre les impulsions de chaque paire d'impulsions de trame reçues du récepteur, et le circuit de commande (30) comporte en outre un dispositif de vérification du fait que la synchronisation du récepteur correspond à celle des données des trames.
